# EUROPÄISCHE PATENTANMELDUNG

(11) **EP 3 393 010 A1**
(43) Veröffentlichungstag der Anmeldung: **24.10.2018**
(21) Anmeldenummer: 17167071.4
(22) Anmeldetag: 19.04.2017
(51) Int. Cl.: H02K 1/27, H02K 29/03

(54) **OPTIMIERUNG DES LÄUFERS EINER PERMANENTERREGTEN SYNCHRONMASCHINE ZUR REDUZIERUNG DES NUTRASTMOMENTS UND DER DREHMOMENTWELLIGKEIT**

(71) Anmelder: Siemens Aktiengesellschaft, 80333 München (DE)
(72) Erfinder: Wehner, Andreas, 97688 Bad Kissingen (DE)

(57) **Zusammenfassung**

Die Erfindung betrifft eine elektrische Maschine, die vorzugsweise als permanenterregte Synchronmaschine ausgeführt ist und einen Ständer (1) und einen Läufer mit einem Läuferkern (4) aufweist. Auf dem Läufer sind Permanentmagnete (2) angeordnet. An der Unterseite der Permanentmagnete (2) und/oder in einem an die Permanentmagnete (2) angrenzenden Bereich des Läuferkerns (4) ist Material ausgespart (3, 5). Dadurch werden die Drehmomentwelligkeit sowie das Nutrastmoment der elektrischen Maschine verringert.

## Beschreibung

Die Erfindung betrifft eine elektrische Maschine, die einen Ständer und einen Läufer mit einem Läuferkern umfasst, wobei der Läufer wenigstens einen Permanentmagneten mit einer dem Läuferkern zugewandten Unterseite und einer dem Läuferkern abgewandten Oberseite aufweist.

Bei permanenterregten Synchronmaschinen, die vorzugsweise als permanenterregte Servomotoren in Zahnspulentechnik ausgeführt sind, kommt es aufgrund der Anordnung der Permanentmagnete zu einem Nutrastmoment und/oder einer Drehmomentwelligkeit. Sowohl das Nutrastmoment als auch die Drehmomentwelligkeit sind unerwünscht, da sie den Gleichlauf der Motoren stören.

Aus der DE102004045939A1 ist eine permanenterregte Synchronmaschine mit einem mit Nuten versehenen Ständer und mit einem mit Permanentmagneten, die magnetische Pole bilden, versehenen Läufer bekannt. Hierbei werden Drehmomentwelligkeit und Nutrastmoment durch eine geschrägte oder auch gestaffelte Anordnung der Permanentmagnete erreicht.

Aus der EP2073352A1 ist eine permanenterregte Synchronmaschine mit einem mit Nuten versehenen Ständer und mit einem Läufer, der Permanentmagnete aufweist, die magnetische Pole bilden, wobei die Permanentmagnete als Schalenmagnete mit zwei gekrümmten Oberflächen ausgeführt sind, bekannt. Der Innenradius der Schalenmagnete ist hierbei vorzugsweise gleich dem Außenradius der Schalenmagnete. Der sogenannte Blümchenläufer erreicht eine Reduzierung der Drehmomentwelligkeit und des Nutrastmoments.

Der Erfindung liegt die Aufgabe zugrunde, ein Nutrastmoment und/oder eine Drehmomentwelligkeit einer elektrischen Maschine zu verringern, um so einen verbesserten Gleichlauf der elektrischen Maschine zu gewährleisten.

Die Lösung der Aufgabe gelingt durch eine elektrische Maschine, die einen Ständer und einen Läufer mit einem Läuferkern umfasst, wobei der Läufer wenigstens einen Permanentmagneten mit einer dem Läuferkern zugewandten Unterseite und einer dem Läuferkern abgewandten Oberseite aufweist, wobei an der Unterseite des Permanentmagneten und/oder in einem an dem Permanentmagneten angrenzenden Bereich des Läuferkerns Material ausgespart ist.

Weitere vorteilhafte Ausführungen ergeben sich aus den Unteransprüchen.

Die Erfindung bietet den Vorteil, dass das an der Unterseite des Permanentmagneten und/oder in einem an dem Permanentmagneten angrenzenden Bereich des Läuferkerns ausgesparte Material die Drehmomentwelligkeit sowie das Nutrastmoment der elektrischen Maschine verringert.

Die Erweiterung des Luftspalts durch die Materialaussparung provoziert einen Feldeinbruch. Der Feldeinbruch wirkt sich bezüglich einer Reduzierung des Nutrastmoments und der Drehmomentwelligkeit positiv aus.

Vorteilhaft ist die elektrische Maschine als permanenterregte Synchronmaschine, vorzugsweise als permanenterregter Servomotor in Zahnspulentechnik, ausgeführt. Jedoch sind auch andere Wicklungsarten - beispielsweise permanenterregte Servomotoren mit verteilter Wicklung - in der elektrischen Maschine möglich.

Als Permanentmagnete eignen sich besonders gut Hochenergiemagnete, vorzugsweise Legierungen aus Neodym-Eisen-Bohr oder Samarium-Kobalt. Hochenergiemagnete werden bei elektrischen Synchronmaschinen bevorzugt, da dadurch eine kompakte Anordnung der elektrischen Maschine bewerkstelligt werden kann. Jedoch können auch Ferritmagnete eingesetzt werden. Bei gleicher Bauart weist eine permanenterregte Synchronmaschine mit Ferritmagneten aber ein geringeres Drehmoment auf als eine permanenterregte Synchronmaschine mit Hochenergiemagneten.

Die vorzugsweise rund um den Läufer angeordneten Permanentmagnete sind insbesondere als außenliegende Magnete ausgeführt, da diese Art der Magnetanordnung eine leichte und kostengünstige Fertigung eines Läuferkerns, welches vorzugsweise als Blechpaket ausgeführt ist, erlaubt. Jedoch ist auch eine Einbettung der Magnete - auch als innenliegende Permanentmagnete bekannt - in den Läufer möglich, wenn sehr hohe Drehzahlen erforderlich sind.

Die Permanentmagnete sind als Schalenmagnete oder als randabgesenkte Schalenmagnete oder als Magnete konstanter Höhe mit am Rand vergrößertem Luftspalt ausgeführt. Eine derartige Ausführung der Permanentmagnete wirkt sich positiv auf die Reduzierung eines Nutrastmoments sowie einer Drehmomentwelligkeit aus, wodurch auf eine übliche gestaffelte oder geschrägte Anordnung der Permanentmagnete verzichtet werden kann.

In Verbindung mit Permanentmagneten, die als Magnete konstanter Höhe mit am Rand vergrößerten Luftspalt ausgeführt sind, wobei der so ausgebildete Läufer auch als "Blümchenläufer" bezeichnet wird, bewirken die Materialaussparungen besonders gute Ergebnisse bezüglich der Reduzierung des Nutrastmoments und der Reduzierung der Drehmomentwelligkeit. Die Materialaussparungen an der Unterseite des Permanentmagneten und/oder dem Läuferkern sind in einer bevorzugten Ausführungsform parallel oder im Wesentlichen parallel zu einer Drehachse des Läufers angeordnet und als Nuten ausgeführt. Im Querschnitt betrachtet können die Materialaussparungen in Form eines Halbkreises oder in Form einer Ellipse oder in Form eines Vielecks oder in Form eines Halbovals ausgeführt sein. Jedoch sind auch andere Formen möglich. Sind wenigstens zwei Materialaussparungen vorzugsweise als Nuten ausgeführt, können sie sich hinsichtlich ihrer Ausführungsform unterscheiden. Eine Mischung der oben genannten Formen ist möglich. Diese Eigenschaften ermöglichen eine günstige und einfache Herstellung des Läufers.

Vorteilhaft befindet sich die Materialaussparung an der Unterseite des Permanentmagneten in einer Polmitte, da in Versuchen diese Anordnung die besten Ergebnisse erzielt und diese Anordnung zudem Kosten spart. Der reduzierte Materialeinsatz des Permanentmagneten wirkt sich neben der Reduzierung der Drehmomentwelligkeit und der Reduzierung des Nutrastmoments auch positiv auf die Kosten des Motors aus.

Die Materialaussparung kann sich jedoch auch am Läuferkern unterhalb des Permanentmagneten, vorzugweise an den Permanentmagneten angrenzend, befinden. Vorteilhaft befindet sich die Materialaussparung im Läuferkern mittig unter dem Permanentmagneten.

In einer bevorzugten Ausführungsform reicht die als Nut ausgeführte Materialaussparung von einem axialen Ende des Permanentmagneten oder Läuferkerns zu einem anderen axialen Ende des Permanentmagneten oder Läuferkerns und verläuft hierbei parallel oder im Wesentlichen parallel zur Drehachse des Läufers. Die Materialaussparung im Permanentmagneten als auch im Läuferkern ist vorzugsweise aus Symmetriegründen mittig ausgeführt. Eine außermittige Ausführung ist möglich. Zudem muss die Materialaussparung nicht nur aus einer Nut bestehen, sondern kann auch aus mehreren hintereinander oder nebeneinander angeordneten Nuten bestehen. Die Materialaussparung muss nicht durchgehend ausgeführt sein, sondern kann auch Unterbrechungen aufweisen.

Vorteilhaft weist der Läuferkern mehrere, insbesondere sechs, gleichmäßig über den Umfang verteilte Permanentmagnete auf. Jeder Permanentmagnet weist hierbei in der Polmitte genau eine Materialaussparung auf. Wird die Materialaussparung im Läuferkern ausgeführt, befindet sie sich vorteilhaft jeweils mittig unter dem Permanentmagneten. Diese Ausführung vermeidet eine Unwucht, erzielt eine große Wirkung bezüglich einer Reduzierung eines Nutrastmoments und einer Reduzierung einer Drehmomentwelligkeit. Zudem ist der symmetrische Aufbau günstig bezüglich eines verbesserten Gleichlaufs der elektrischen Maschine. Bei einer Materialaussparung, die ca. ein Drittel des Permanentmagneten ausmacht, wurde in Simulationen eine sehr starke Reduzierung der Drehmomentwelligkeit erreicht.

Alternativ kann die Materialaussparung auch bei Rotoren mit innenliegenden Permanentmagneten realisiert werden.

Ein weiterer Vorteil der Materialaussparung ist eine leichte Reduzierung des Trägheitsmoments, da sich weniger Masse am Läuferumfang befindet, die beschleunigt werden muss.

Im Folgenden wird die Erfindung anhand der in den Figuren dargestellten Ausführungsbeispiele näher beschrieben und erläutert. Es zeigen:
- FIG 1: eine Ausgestaltung einer permanenterregten Synchronmaschine, die als permanenterregter Servomotor in Zahnspulentechnik ausgeführt ist und einen Ständer und einen Läufer umfasst,
- FIG 2: einen Ausschnitt einer Ausgestaltung einer permanenterregten Synchronmaschine, die eine Materialaussparung im Läuferkern aufweist,
- FIG 3: einen Ausschnitt einer Ausgestaltung einer permanenterregten Synchronmaschine, die eine Materialaussparung im Permanentmagneten aufweist und
- FIG 4: einen Ausschnitt einer Ausgestaltung einer permanenterregten Synchronmaschine mit innenliegenden Permanentmagneten, die eine Materialaussparung im Läuferkern aufweist.

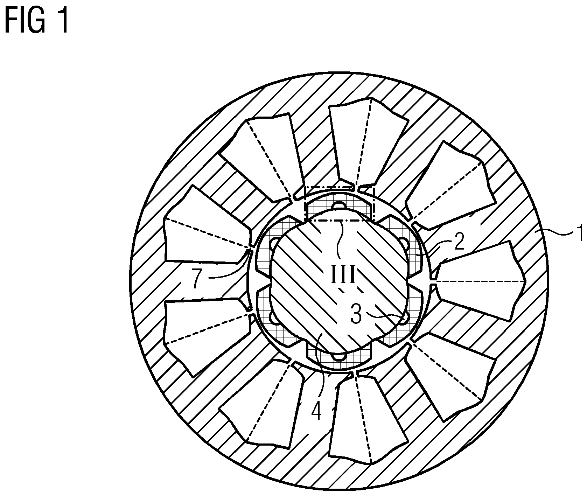

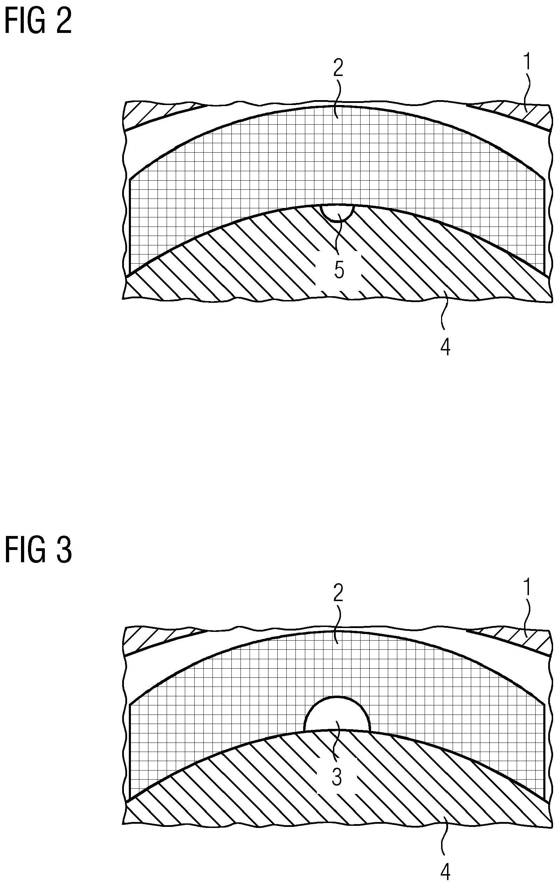

In FIG 1 wird eine Ausgestaltung einer permanenterregten Synchronmaschine, die als permanenterregter Servomotor in Zahnspulentechnik ausgeführt ist und einen Ständer 1 und einen Läufer umfasst, gezeigt. Der Ständer 1 umfasst vorzugsweise Ständernutschlitze 7. Der Läufer weist einen Läuferkern 4 und Permanentmagnete 2 auf, die als Magnete konstanter Höhe mit am Rand vergrößertem Luftspalt ausgeführt sind. Ein derartiger Motor wird auch als Blümchenläufer bezeichnet. Die Permanentmagnete sind vorzugsweise als Hochenergiemagnete, insbesondere als Legierung aus Neodym-Eisen-Bohr oder Samarium-Kobalt ausgeführt. In den Permanentmagneten befinden sich Materialaussparungen 3. Diese Materialaussparungen bewirken gegenüber einer herkömmlichen elektrischen Maschine eine Veränderung des Feldlinienverlaufs der von den Permanentmagneten erzeugten Magnetfelder und damit eine Reduzierung des Nutrastmoments und/oder der Drehmomentwelligkeit. In FIG 1 wird zudem auf einen Ausschnitt III verwiesen, der in FIG 3 vergrößert dargestellt ist. Die in FIG 1 dargestellte Ausgestaltung zeigt die bevorzugte Ausführung der Erfindung.

In FIG 2 und FIG 3 werden Ausschnitte verschiedener Ausgestaltungen der Materialaussparung aufgezeigt.

In FIG 2 findet sich die Materialaussparung 5 im Läuferkern 4. Dieser Läuferkern 4 befindet sich im Ständer 1 und weist zudem einen Permanentmagneten 2 an seiner Oberseite auf.

Die als Nut ausgeführte Materialaussparung 5 reicht aus Gründen einer vereinfachten Herstellung des Läuferkerns von einem axialen Ende des Läufers zu einem anderen axialen Ende des Läufers und verläuft hierbei parallel oder im Wesentlichen parallel zur Drehachse des Läufers. Die Materialaussparung im Läuferkern ist aus Gründen der Symmetrie mittig ausgeführt. Eine außermittige Ausführung ist möglich. Zudem muss die Materialaussparung nicht nur aus einer Nut bestehen, sondern kann auch aus mehreren hintereinander oder nebeneinander angeordneten Nuten bestehen. Im Querschnitt betrachtet hat die Materialaussparung 5 aus Gründen einer vereinfachten Herstellung des Läuferkerns die Form eines Halbkreises. Jedoch sind auch andere Formen möglich.

In FIG 3 ist ein Läufer dargestellt, der einen Läuferkern 4 umfasst sowie einen auf dem Läuferkern 4 angebrachten Permanentmagneten 2. Der Permanentmagnet 2 weist eine Materialaussparung 3 auf. Der Läufer befindet sich im Ständer 1. Diese Ausführungsform ist besonders vorteilhaft, da sie eine Reduzierung der Kosten des Motors mit sich bringt, weil sich die Materialaussparung 3 im teuren Permanentmagneten 2 befindet. Aus Gründen der Symmetrie und aus Gründen einer vereinfachten Herstellung befindet sich die Materialaussparung 3 vorzugsweise als Nut von einem axialen Ende des Läufers zu einem anderen Ende des Läufers ausgeführt mittig im Permanentmagneten 2 und grenzt direkt an den Läuferkern 4.

In FIG 2 und FIG 3 ist ein Ausschnitt dargestellt, wobei Permanentmagnete 2 zum Einsatz kommen, die als Magnete konstanter Höhe mit dem am Rand vergrößerten Luftspalt ausgeführt sind. Diese Ausführungsform erzielt die besten Ergebnisse bezüglich einer Reduzierung einer Drehmomentwelligkeit und eines Nutrastmoments.

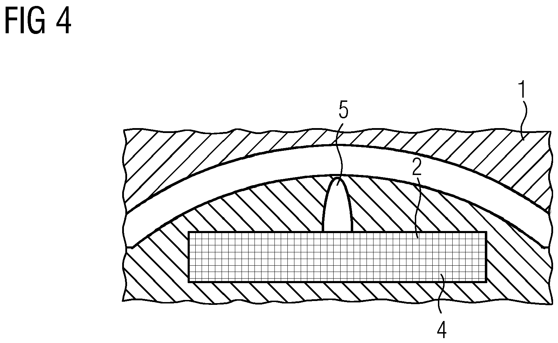

FIG 4 zeigt einen Ausschnitt einer Ausgestaltung einer permanenterregten Synchronmaschine mit innenliegenden Permanentmagneten 2, die eine Materialaussparung im Läuferkern 5 aufweist. Vorteilhaft wird die Materialaussparung 5 an einer Oberseite des innenliegenden Permanentmagneten 2 ausgeführt, da hierbei neben der Reduzierung der Drehmomentwelligkeit und des Nutrastmoments eine zusätzliche Flusssperre für ein Ankerquerfeld erreicht wird.

## Patentansprüche

1. Elektrische Maschine, die einen Ständer (1) und einen Läufer mit einem Läuferkern (4) umfasst, wobei der Läufer wenigstens einen Permanentmagneten (2) mit einer dem Läuferkern (4) zugewandten Unterseite und einer dem Läuferkern abgewandten Oberseite aufweist,
**dadurch gekennzeichnet, dass** an der Unterseite des Permanentmagneten (2) und/oder in einem an den Permanentmagneten (2) angrenzenden Bereich des Läuferkerns (4) Material ausgespart ist (3, 5).

2. Elektrische Maschine nach Anspruch 1, wobei die elektrische Maschine als permanenterregte Synchronmaschine ausgeführt ist.

3. Elektrische Maschine nach einem der Ansprüche 1 oder 2, wobei die elektrische Maschine als permanenterregter Servomotor in Zahnspulentechnik ausgeführt ist.

4. Elektrische Maschine nach einem der Ansprüche 1 bis 3, wobei als Permanentmagnet (2) ein Hochenergiemagnet eingesetzt ist, der vorzugsweise eine Legierung aus Neodym-Eisen-Bohr oder Samarium-Kobalt enthält.

5. Elektrische Maschine nach einem der Ansprüche 1 bis 4, wobei der Permanentmagnet (2) als außenliegender Magnet ausgeführt ist.

6. Elektrische Maschine nach einem der Ansprüche 1 bis 5, wobei der Permanentmagnet (2) als Schalenmagnet oder randabgesenkter Schalenmagnet oder Magnet konstanter Höhe mit am Rand vergrößertem Luftspalt ausgeführt ist.

7. Elektrische Maschine nach einem der Ansprüche 1 bis 6, wobei die Materialaussparung (3, 5) an der Unterseite des Permanentmagneten (2) und/oder im Läuferkern (4) wenigstens im Wesentlichen einen Querschnitt in Form eines Halbkreises oder in Form einer Ellipse oder in Form eines Vielecks aufweist.

8. Elektrische Maschine nach einem der Ansprüche 1 bis 7, wobei sich die Materialaussparung (3, 5) an der Unterseite des Permanentmagneten (2) in einer Polmitte des Permanentmagneten (2) befindet.

9. Elektrische Maschine nach einem der Ansprüche 1 bis 8, wobei sich die Materialaussparung (3, 5) im Läuferkern (4) unterhalb des Permanentmagneten (2), vorzugsweise an den Permanentmagneten (2) angrenzend, befindet.

10. Elektrische Maschine nach einem der Ansprüche 1 bis 9, wobei sich die Materialaussparung (3, 5) im Läuferkern (4) mittig unter dem Permanentmagneten (2) befindet.

11. Elektrische Maschine nach einem der Ansprüche 1 bis 10, wobei die Materialaussparung (3, 5) als Nut ausgeführt ist.

12. Elektrische Maschine nach einem der Ansprüche 1 bis 11, wobei an der Unterseite des Permanentmagneten (2) und/oder in einem an den Permanentmagneten (2) angrenzenden Bereich des Läuferkerns (4) wenigstens zwei Nuten ausgeführt sind.

13. Elektrische Maschine nach Anspruch 12, wobei die Nuten hintereinander und/oder nebeneinander angeordnet sind.

14. Elektrische Maschine nach einem der Ansprüche 1 bis 13, wobei die Materialaussparung (3, 5) von einem axialen Ende eines Läufers einer elektrischen Maschine zu einem anderen axialen Ende eines Läufers einer elektrischen Maschine reicht.

15. Elektrische Maschine nach einem der Ansprüche 1 bis 14, wobei die Materialaussparung (3, 5) parallel zu einer Drehachse eines Läufers einer elektrischen Maschine verläuft.

16. Elektrische Maschine nach einem der Ansprüche 1 bis 15, wobei die Materialaussparung (3, 5) im Wesentlichen parallel zu einer Drehachse eines Läufers einer elektrischen Maschine verläuft.

17. Elektrische Maschine nach einem der Ansprüche 1 bis 16, wobei der Läuferkern (4) mehrere, insbesondere sechs, gleichmäßig über den Umfang verteilte Permanentmagnete (2) aufweist.

18. Elektrische Maschine nach Anspruch 17, wobei jeder Permanentmagnet (2) in der Polmitte genau eine Materialaussparung (3) aufweist.
